# EUROPEAN PATENT SPECIFICATION

(11) **EP 0 587 214 B1**
(45) Date of publication and mention of the grant of the patent: **27.12.1996**
(21) Application number: 93202393.0
(22) Date of filing: 16.08.1993
(51) Int. Cl.: B60P 1/44

(54) **Loading bridge for transport vehicles**
Ladebordwand für Transportfahrzeuge
Hayon élévateur pour véhicules de transport

(30) Priority: 11.09.1992 BE 9200797
(43) Date of publication of application: 16.03.1994
(73) Proprietor: DHOLLANDIA, naamloze vennootschap, B-9111 Belsele (BE)
(72) Inventor: Dhollander, Jan, B-9160 Lokeren (BE)
(74) Representative: Donné, Eddy

(56) References cited:
- DE-A- 3 610 090
- FR-A- 2 257 461
- US-A- 4 898 510
- US-A- 4 930 973

## Description

The present invention concerns a loading bridge for transport vehicles, with the characteristics of the preamble of independent claim 1.

It is known that for loading bridges of the above-mentioned type, a wedge-shaped loading flap is used. In this case, the loading bridge is controlled by a device thus designed that, after loading, the loading flap and its loading platform are first turned in a horizontal position and then raised with a horizontal loading platform until the loading platform is on an equal level with the floor of the transport vehicle in question.

Several of the known devices to control the loading flap are disadvantageous in that the supporting point of the loading flap is shoved over the bottom over a considerable distance at the moment the loading platform is brought from the horizontal position in the oblique position, or vice versa, thus frequently damaging the underlying bottom or floor.

A solution of this problem is described in US-A-4 930 973, US-A-4 898 510, DE-A-3 610 090 and FR-A-2 257 461, by providing the device with means allowing that the loading flap in lowered position, when placing the loading platform in the oblique or horizontal position, solely rotates around its supporting point.

The invention aims a further improved construction which is compact, so that the loading bridge is not only suitable for large vehicles, but is also suitable for small transport vehicles which only have a limited space under the loading floor.

To this end the invention concerns a loading bridge for transport vehicles, consisting of a wedge-shaped loading flap which is suspended onto two rotary shafts, which are situated at the broadest side of the loading flap one on top of the other, said loading flap having a loading platform which can be placed in an oblique position when lowered, and of a device to control the loading flap, this device being provided with means allowing that the loading flap in lowered position, when placing the loading platform in the oblique or horizontal position, solely rotates around its supporting point, whereby said means allowing that the loading flap only rotates around its supporting point mainly consist of a first linkage between the frame of the transport vehicle and the lower rotary shaft, which allows that this rotary shaft is kept in one and the same position when the loading flap is lowered, a second linkage between the frame of the transport vehicle and the upper rotary shaft, whereby this second linkage is adjustable in length and to this end has at least two arms which are interconnected by means of hinges, this linkage allowing to move the upper rotary shaft, and drive means to provide for said movement when the loading platform is placed in an oblique, respectively horizontal position, consisting of at least one pressure cilinder to mutually move the arms, in other words to change the angle in between, characterized in that the arm which is attached to the loading flap is designed as a lever arm and in that the pressure cylinder is mounted between said arm and the frame of the transport vehicle.

In order to better explain the characteristics according to the invention, by way of example only and without being limitative in any way, the following preferred embodiments are described with reference to the accompanying drawings, in which:
figures 1, 2 and 3 show a loading bridge according to the invention, for three different positions;
figure 4 shows a view according to arrow 4 in figure 3;
figure 5 shows a view of the part indicated in figure 3 with F5 to a larger scale;
figure 6 shows a cross-section according to line VI-VI in figure 5;
figures 7 and 8 schematically describe the operation of the loading bridge;
figure 9 shows a variant of the part represented in figure 5;
figure 10 shows a cross-section according to line X-X in figure 9;
figure 11 shows another variant of the part represented in figure 5;
figure 12 shows a cross-section according to line XII-XII in figure 11;
figure 13 shows another variant of the part represented in figure 5;
figure 14 shows a cross-section according to line XIV-XIV in figure 13;
figure 15 shows another variant of the part represented in figure 5;
figure 16 shows a cross-section according to line XVI-XVI in figure 15;
figure 17 shows another variant of the part represented in figure 5, in the position whereby the loading platform of the loading flap is horizontal;
figure 18 shows a cross-section according to line XVIII-XVIII in figure 17;
figure 19 shows the part from figure 17 for another position.

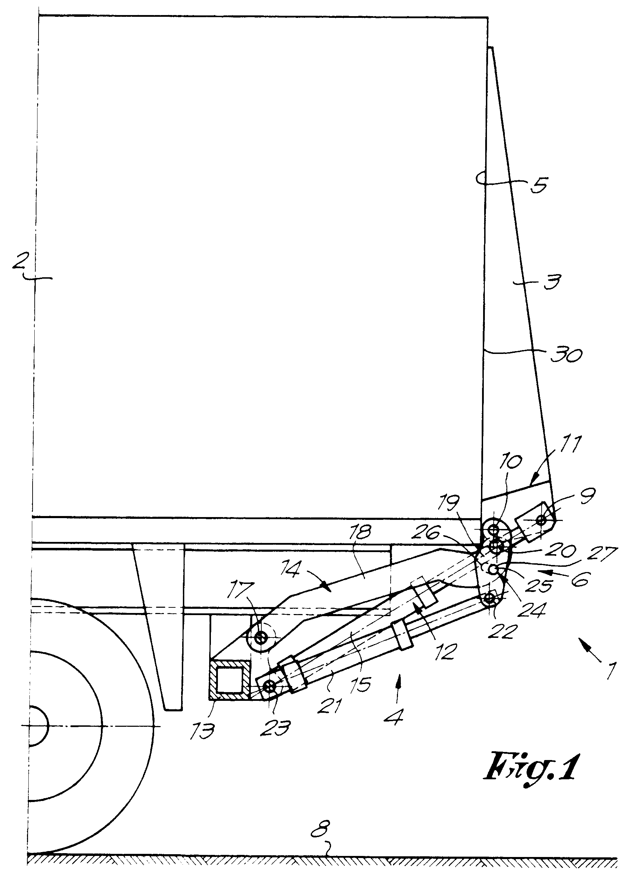

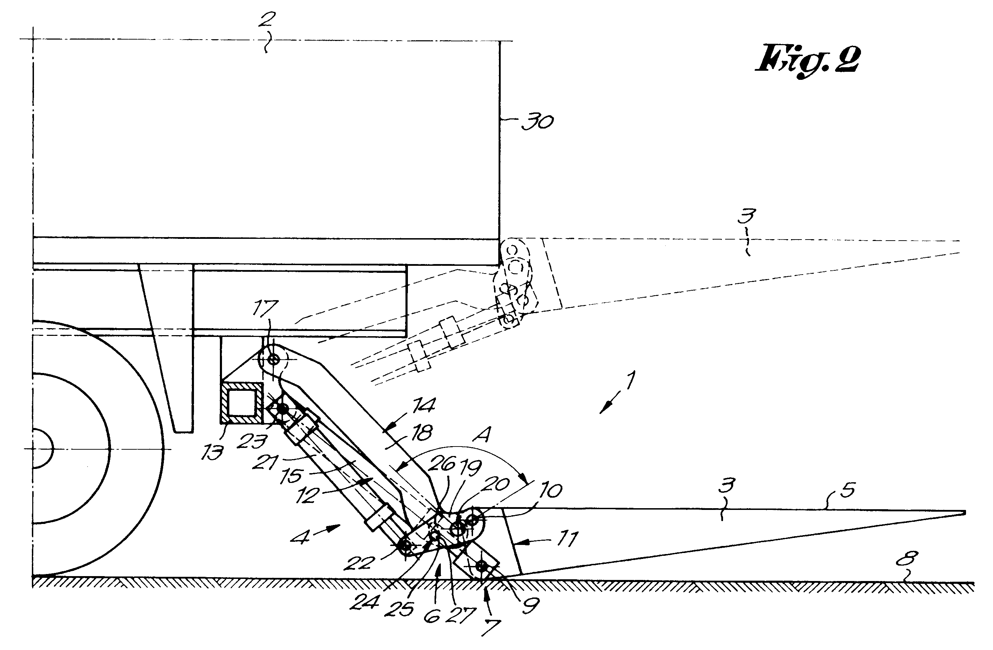

As shown in figures 1, 2 and 3, the invention concerns a loading bridge 1 for a transport vehicle 2. More specifically, it concerns a loading bridge 1 which consists of a loading flap 3 and a device 4 to control the loading flap 3, one and other such that when lowered the loading flap 3 can be placed in two positions, a first position as shown in figure 2, whereby the loading platform 5 is horizontal, and a second position as shown in figure 3 respectively, whereby the loading platform 5 is oblique, so as to easily shove or roll a load on the loading flap 3.

The device 4 is provided with means 6 allowing that the loading flap 3 in the lowered position and when placing it in an oblique position, respectively when the loading platform 5 is placed in a horizontal position, in other words during the movement between the positions of figures 2 and 3, only rotates around its supporting point 7. In this way the loading flap 3 hardly moves over the bottom 8, thus excluding the chance that the latter is damaged.

The loading flap 3 is connected to the device 4 by means of two rotary shafts 9 and 10, which are one on top of the other when the loading flap 3 is in the lowered position, and which are situated on the broadest end 11 of the wedge-shaped loading flap 3. The above-mentioned means 6 consist of a first linkage 12 between the lower rotary shaft 9 and the frame 13 of the transport vehicle 2 which allows to keep the loading flap 3 at its lower rotary shaft in the same position when in the lowered position, and a second linkage 14 between the upper rotary shaft 10 and the frame 13 which allows to move the loading flap 3 at its upper rotary shaft 10, so that the loading platform 5 can be moved between the horizontal position of figure 2 and the oblique position of figure 3.

The above-mentioned connections 12 and 14 preferably consist of two symmetrical constructions at the left and right side of the transport vehicle 2. For clarity's sake, only one construction is described hereafter.

In the shown example, said first linkage 12 consists of a pressure cylinder 15 which is connected with hinges between the rotary shaft 9 of the loading flap 3 and a rotating point 16 onto the frame 13. The rotating point 16 is clearly visible in figure 4.

The above-mentioned second linkage 14 extends between the rotary shaft 10 and a rotating point 17 on the frame 13, and is designed such that it can be changed in length, as a result of which the distance between the rotating point 17 and the rotary shaft 10 can be modified. According to the invention, the second linkage 14 therefore buckles. To this end, the second linkage 14 consists of two arms 18 and 19 which are connected to one another by means of a pin 20, one and other such that the length of the connection 14 can be modified by changing the angle A between the two arms 18 and 19.

As shown in figures 1 to 3, the angle A between the arms 18 and 19 can be changed by means of a pressure cylinder 21, which is preferably mounted between the frame 13 and a rotating point 22 on the arm 19, whereby the rotating point 22, in relation to the pin 20, is placed opposite the rotary shaft 10. The pressure cylinder 21 is connected to the frame 13 at a rotating point 23 which is or is not situated coaxially at the rotating point 16. As a result, the arm 19 operates as a lever which can be turned around the pin 20.

Moreover, the whole is provided with stop elements 24 which determine the outmost position for the mutual position of the arms 18 and 19, whereby this outmost position determines the smallest angle A, or thus the smallest distance between the rotating point 17 and the rotary shaft 10.

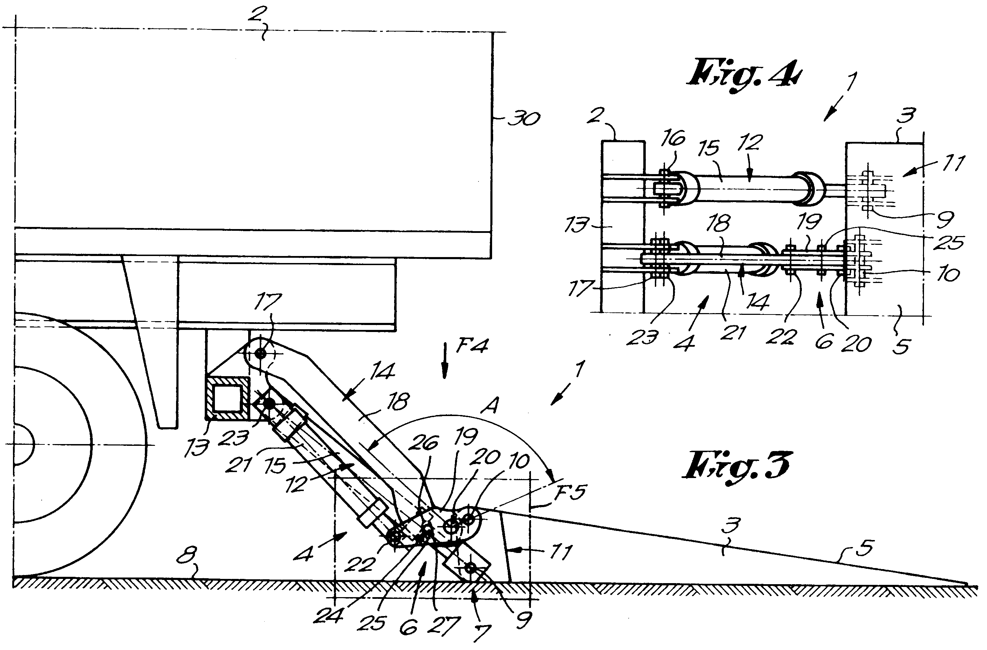

The form of the arm 19, as well as the stop elements 24 are represented in detail in figures 5 and 6.

According to the embodiment of figures 5 and 6, the stop elements 24 consist of a peg 25 mounted in the arm 19, which can work in conjunction with a groove 26 with specific dimensions, in the arm 18, one and other such that, when extending the pressure cylinder 21, the arm 19 can be rotated around the pin 20 until the peg 25 makes contact with the end 27 of the groove 26, which then acts as a stop which determines the smallest angle A.

As shown in figure 6, the arm 19 preferably consists of two parts 28 and 29 at both sides of the end of the arm 18.

The rotary shafts 9 and 10 and the rotating points 16 and 17 are thus placed that they form the angular points of a parallelogram, in any case for the positions in which the loading platform 5 of the loading flap 3 is horizontal.

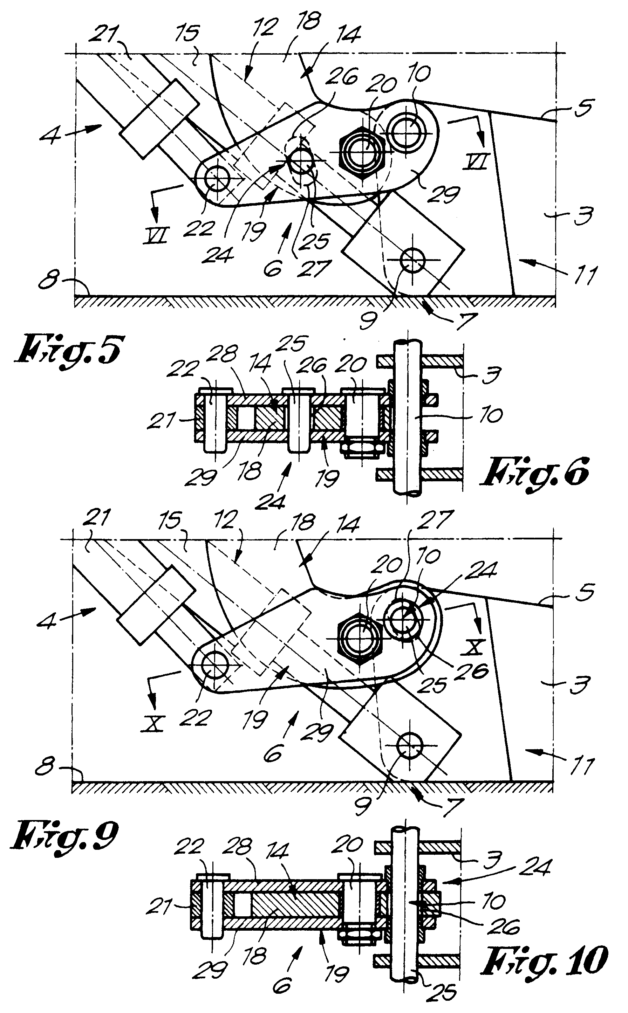

The working of the loading bridge 1 is explained hereafter on the basis of figures 1 to 3 and the schematic figures 7 to 8. The proportions of the various parts in figures 7 and 8 differ from the ones in figures 1 to 3, in order to visibly show the working principle.

Figure 1 shows the loading flap 3 in raised position, whereby it is raised against the back side 30 of the transport vehicle 2. To this end, the pressure cylinder 15 is extended, thus bringing the rotary shaft 9 at almost the same level as the rotary shaft 10.

The pressure cylinder 21 is also extended, thus pushing the peg 25 unto the end 27 of the groove 26.

In order to bring the loading platform 5 in the horizontal position, the pressure cylinder 15 is withdrawn, thus reaching the position as shown in figure 2 in a dashed line. As mentioned before, the attachment points, formed by the rotary shafts 9 and 10 and the rotating points 16 and 17, are then situated on the angular points of a parallelogram. By leaving the sides of the parallelogram-shaped structure unchanged, while changing the angles, the loading flap 3 can be moved downwards, whereas the loading platform 5 remains horizontal. To this end, the pressure cylinder 21 is withdrawn, whereby it is obvious that, as long as the loading flap 3 does not touch the bottom 8, the stop elements 24 keep the arms 18 and 19 closed.

As soon as the supporting point 7 of the loading flap 3 touches the bottom 8, the stop elements 24 loose their function. By further withdrawal of the pressure cylinder 21, the arms 18 and 19 are further unfolded and the loading flap 3 rotates around its supporting point. Since the rotating point 9 is hereby kept in the same position, the loading flap 3 hardly moves over the bottom 8, thus excluding the chance to damage the latter.

In the position of figure 3, a load can easily be shoved or rolled on the loading platform 5. Next, the cycle is repeated in the reverse sense until the position indicated in figure 2 by a dashed line is reached and the load on the loading platform 5 can be transferred to the loading floor of the transport vehicle 2.

The working principle described above is shown in a simplified way in figures 7 and 8, clearly showing that the loading flap 3 can be rotated around the supporting point 7 by increasing, respectively reducing, the value of the angle A.

It is obvious that said whole is provided with a control unit and a control unit in order to control the above-mentioned drive means, in the example shown the pressure cylinders 15 and 21. The pressure cylinders 15 and 21 can be either hydraulic or pneumatic. Of course, drive means other than pressure cylinders can be used.

The construction described above also has the advantage that only one drive element, in this case the pressure cylinder 21, suffices in order to, on the one hand, move the loading flap 3 up and down between the bottom 8 and the loading floor of the transport vehicle 2, and on the other hand, to put the loading flap 3 with its loading platform 5 in an oblique, respectively horizontal position.

Another advantage of said construction is that it is relatively compact and therefore can be easily used for small transport vehicles, having only a limited space under the loading floor.

In figures 9-10, 11-12, 13-14 and 15-16, various embodiments of the stop elements 24 are shown.

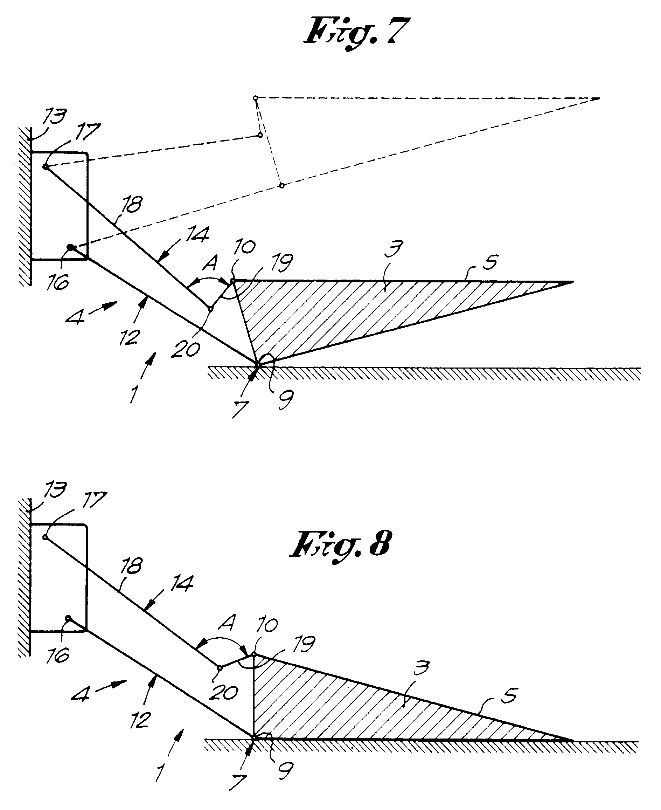

According to figures 9 and 10, the above-mentioned peg 25 is situated at the height of the rotating point 10.

According to figures 11 and 12, the above-mentioned peg 25 is situated at the height of the rotating point 22.

Of course, the groove 26 in the embodiments of figures 9 to 12 is provided accordingly.

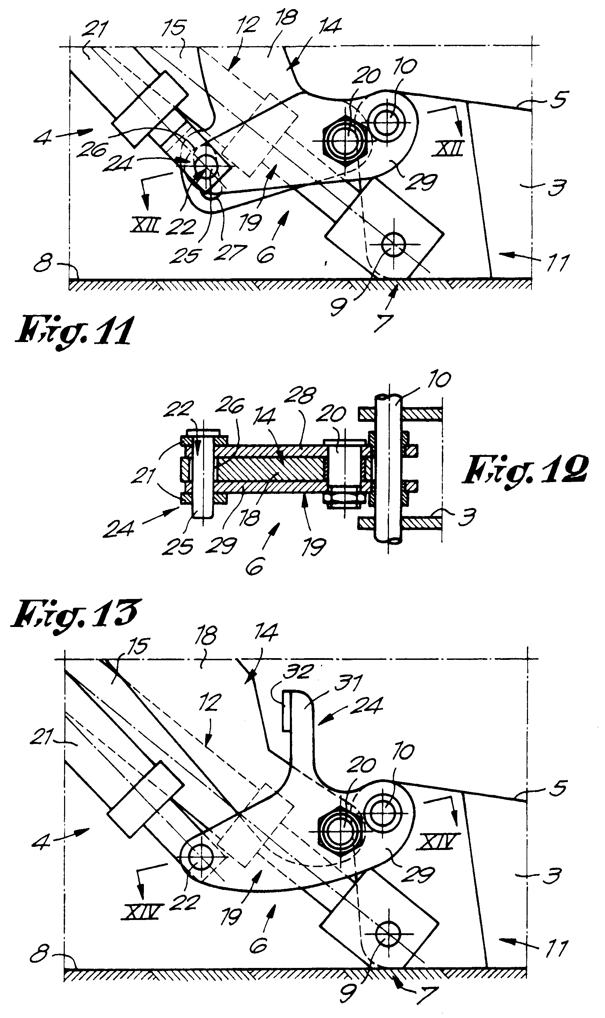

Figures 13-14 and 15-16 show two variants whereby the stop elements 24 consist of a protruding part 31 on the arm 19, which can make contact with the arm 18.

According to the embodiment of figures 13 and 14, both parts 28 and 29 have a protruding part 31 which are interconnected by means of an element 32 which can make contact with the arm 18, between the parts 28 and 29.

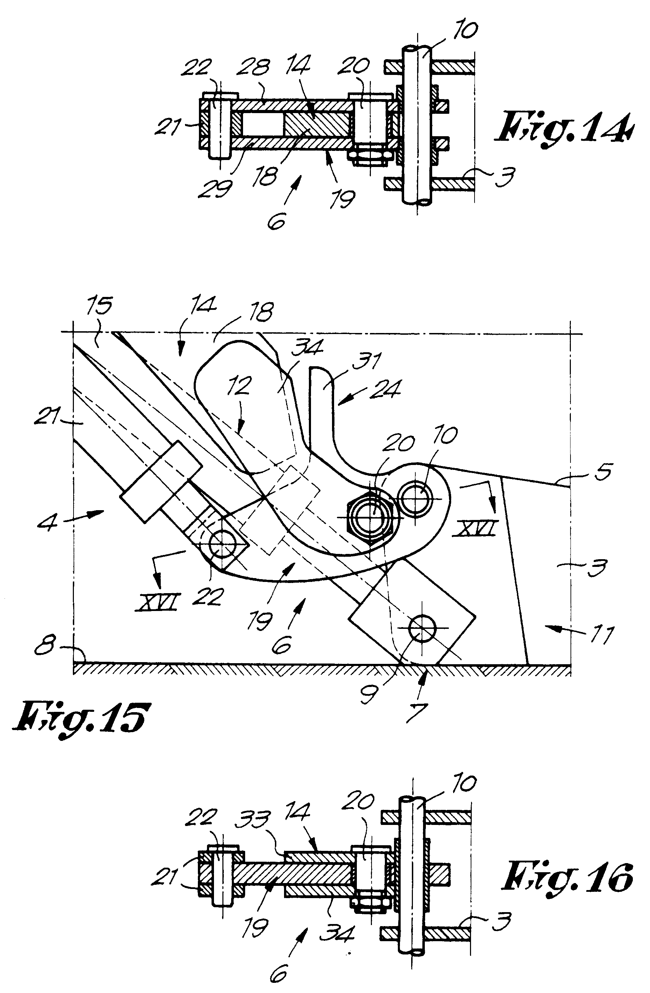

According to figures 15 and 16, the arm 18 has a fork-shaped end, formed by two flanges 33 and 34, in between which the arm 19 is attached, one and other such that the protruding part 31 between the flanges 33 and 34 makes contact with the arm 18.

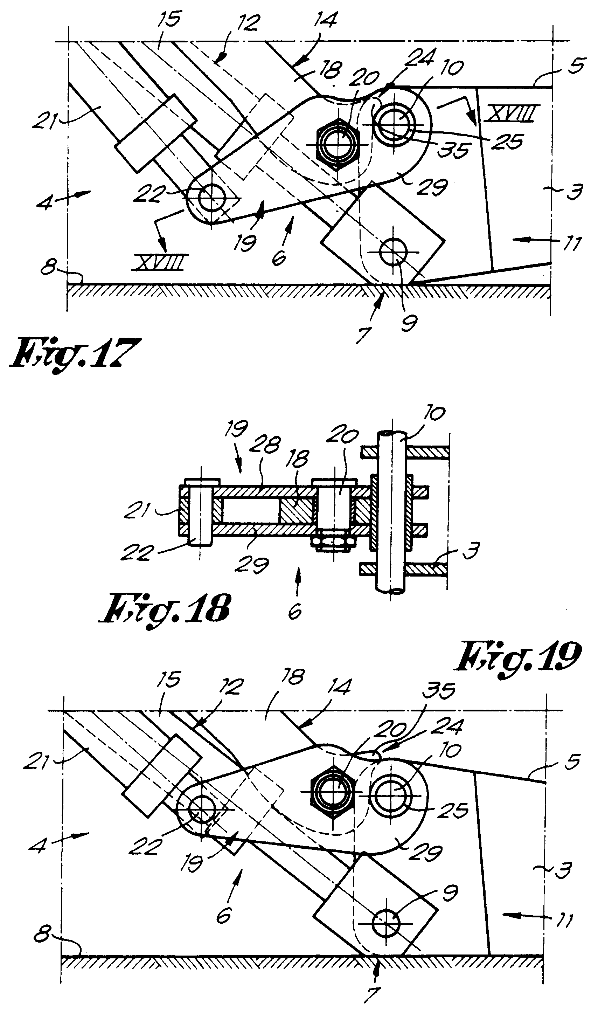

In figures 17 to 19, another embodiment is shown. The stop elements 24 consist in this case of the rotary shaft 10 - which functions as peg 25 - and a protruding part 35 on the arm 19 which, in the position shown in figure 17, forms a stop for the rotary shaft 10.

It should be noted that in the broad sense, the supporting point 7 must be regarded as the corresponding angular point of the loading flap 3. According to the invention, the rotary shaft 9, as well as the outer edge of the angular point or any other point nearby can be regarded as such.

The present invention is in now way limited to the embodiments described by way of example and shown in the accompanying drawings; on the contrary, such a loading bridge for a transport vehicle can be made in various forms and dimensions while still remaining within the scope of the invention as defined by the appended claims.

## Claims

1. Loading bridge for transport vehicles, consisting of a wedge-shaped loading flap (3) which is suspended onto two rotary shafts (9,10), which are situated at the broadest side (11) of the loading flap (3) one on top of the other, said loading flap (3) having a loading platform (5) which can be placed in an oblique position when lowered, and of a device (4) to control the loading flap (3), this device being provided with means (6) allowing that the loading flap (3) in lowered position, when placing the loading platform (5) in the oblique or horizontal position, solely rotates around its supporting point (7), whereby said means (6) allowing that the loading flap (3) only rotates around its supporting point (7) mainly consist of a first linkage (12) between the frame (13) of the transport vehicle (2) and the lower rotary shaft (9), which allows that this rotary shaft (9) is kept in one and the same position when the loading flap (3) is lowered, a second linkage (14) between the frame (13) of the transport vehicle (2) and the upper rotary shaft (10), whereby this second linkage (14) is adjustable in length and to this end has at least two arms (18,19) which are interconnected by means of hinges, this linkage (14) allowing to move the upper rotary shaft (10), and drive means to provide for said movement when the loading platform (5) is placed in an oblique, respectively horizontal position, consisting of at least one pressure cilinder (21) to mutually move the arms (18,19), in other words to change the angle (A) in between, characterized in that the arm (19) which is attached to the loading flap (3) is designed as a lever arm and in that the pressure cylinder (21) is mounted between said arm (19) and the frame (13) of the transport vehicle (2).

2. Loading bridge according to claim 1 characterized in that it is provided with stop elements (24) between said two arms (18,19), which determine the smallest possible length of the second linkage (14).

3. Loading bridge according to claim 2, characterized in that the stop elements (24) mainly consist of a groove (26) in the arm (18) which is connected to the frame (13) by means of hinges, and a peg (25) working in conjunction with the groove (26) which is mounted in the arm (19) which is connected to the loading flap (3) by means of hinges.

4. Loading bridge according to claim 3, characterized in that the above-mentioned peg (25) is situated at the height of the rotary shaft (10) where the loading flap (3) and the second linkage (14) are connected to one another.

5. Loading bridge according to claim 1, characterized in that it is provided with stop elements (24) between said two arms (18,19), which determine the smallest possible length of the second linkage (14); in that the stop elements (24) mainly consist of a groove (26) in the arm (18) which is connected to the frame (13) by means of hinges, and a peg (25) working in conjunction with the groove (26) which is mounted in the arm (19) which is connected to the loading flap (3) by means of hinges; and in that the above-mentioned peg (25) is situated at the height of the rotating point (22) where the pressure cylinder (21) is coupled to the above-mentioned arm (19) which is connected to the loading flap (3).

6. Loading bridge according to any of the previous claims, characterized in that the first linkage (12) mainly consists of a pressure cylinder (15) allowing to change the length of the first linkage (12).

7. Loading bridge according to any of the previous claims, characterized in that the attachment points of the first linkage (12) and the second linkage (14) to the frame (13) and the loading flap (3) for the position of the loading flap (3) whereby the loading platform (5) is horizontal, are situated on the angular points of a parallelogram.

## Patentansprüche

1. Ladebrücke für Transportfahrzeuge, bestehend aus einer keilförmigen Ladeklappe (3), die an zwei Drehachsen (9,10) aufgehängt ist, die sich übereinander an der breitesten Seite (11) der Ladeklappe (3) befinden, wobei besagte Ladeklappe (3) eine Ladeplattform (5) aufweist, die, wenn sie abgesenkt ist, in eine schräge Position gebracht werden kann, und aus einer Vorrichtung (4) zur Steuerung der Ladeklappe (3), wobei diese Vorrichtung mit Mitteln (6) versehen ist, die gestatten, daß die Ladeklappe (3) in abgesenkter Position, wenn die Ladeplattform (5) in die schräge oder horizontale Position gebracht wird, nur um ihren Angelpunkt (7) schwenkt, wobei besagte Mittel (6), die gestatten, daß die Ladeklappe (3) nur um ihren Angelpunkt (7) schwenkt, in der Hauptsache aus einer ersten Verbindung (12) zwischen dem Rahmen (13) des Transportfahrzeugs (2) und der unteren Drehachse (9) bestehen, die gestattet, daß diese Drehachse (9) in ein und derselben Position gehalten wird, wenn die Ladeklappe (3) abgesenkt ist, einer zweiten Verbindung (14) zwischen dem Rahmen (13) des Transportfahrzeugs (2) und der oberen Drehachse (10), wobei diese zweite Verbindung (14) längenverstellbar ist und zu diesem Zweck zumindest zwei Arme (18,19) aufweist, die mittels Scharnieren miteinander verbunden sind, wobei diese Verbindung (14) das Bewegen der oberen Drehachse (10) gestattet, sowie Antriebsmitteln, um für besagte Bewegung zu sorgen, wenn die Ladeplattform (5) in eine schräge, bzw. horizontale Position gebracht wird, bestehend aus zumindest einem Druckzylinder (21) zum Bewegen der Arme (18,19) in Bezug zueinander, mit anderen Worten, zum Verändern des Winkels (A) zwischen ihnen, dadurch gekennzeichnet, daß der Arm (19), der an der Ladeklappe (3) befestigt ist, als Hebelarm ausgeführt ist, und daß der Druckzylinder (21) zwischen besagtem Arm (19) und dem Rahmen (13) des Transportfahrzeugs (2) montiert ist.

2. Ladebordwand gemäß Anspruch 1, dadurch gekennzeichnet, daß sie mit Anschlagelementen (24) zwischen besagten zwei Armen (18,19) versehen ist, die die geringste mögliche Länge der zweiten Verbindung (14) bestimmen.

3. Ladebordwand gemäß Anspruch 2, dadurch gekennzeichnet, daß die Anschlagelemente (24) in der Hauptsache aus einer Nut (26) im Arm (18), der mittels Scharnieren am Rahmen (13) befestigt ist, und einem mit der Nut (26) zusammenwirkenden Zapfen (25) bestehen, der im Arm (19) montiert ist, welcher mittels Scharnieren mit der Ladeklappe (3) verbunden ist.

4. Ladebordwand gemäß Anspruch 3, dadurch gekennzeichnet, daß der obengenannte Zapfen (25) in Höhe der Drehachse (10) angebracht ist, wo die Ladeklappe (3) und die zweite Verbindung (14) miteinander verbunden sind.

5. Ladebordwand gemäß Anspruch 1, dadurch gekennzeichnet, daß sie mit Anschlagelementen (24) zwischen besagten beiden Armen (18,19) versehen ist, welche die geringste mögliche Länge der zweiten Verbindung (14) bestimmen; dadurch, daß die Anschlagelemente (24) in der Hauptsache aus einer Nut (26) im Arm (18) bestehen, der mittels Scharnieren am Rahmen (13) befestigt ist, und einem mit der Nut (26) zusammenwirkenden Zapfen (25), der im Arm (19) montiert ist, der mittels Scharnieren mit der Ladeklappe (3) verbunden ist; und dadurch, daß der obengenannte Zapfen (25) in Höhe des Drehpunkts (22) angebracht ist, wo der Druckzylinder (21) an den obengenannten Arm (19) gekoppelt ist, der mit der Ladeklappe (3) verbunden ist.

6. Ladebordwand gemäß einem der vorigen Ansprüche, dadurch gekennzeichnet, daß die erste Verbindung (12) in der Hauptsache aus einem Druckzylinder (15) besteht, der es gestattet, die Länge der ersten Verbindung (12) zu verändern.

7. Ladebordwand gemäß einem der vorigen Ansprüche, dadurch gekennzeichnet, daß sich die Befestigungspunkte der ersten Verbindung (12) und der zweiten Verbindung (14) mit dem Rahmen (13) und der Ladeklappe (3) für die Position der Ladeklappe (3), wobei die Ladeklappe (5) horizontal ist, an den Eckpunkten eines Parallelogramms befinden.

## Revendications

1. Hayon élévateur pour véhicules de transport, constitué par un rabat de chargement cunéiforme (3) qui est suspendu sur deux arbres rotatifs (9,10) qui sont situés l'un par-dessus l'autre sur le côté le plus large (11) du rabat de chargement (3), ledit rabat de chargement (3) possédant une plate-forme de chargement (5) qui peut être placée en position oblique lorsqu'on l'abaisse, et par un dispositif (4) pour commander le rabat de chargement (3), ledit dispositif étant muni d'un moyen (6) faisant en sorte que le rabat de chargement (3), dans sa position abaissée, lorsqu'on place la plate-forme de chargement (5) dans la position oblique ou horizontale, tourne seulement autour de son point de support (7), dans lequel ledit moyen (6) faisant en sorte que le rabat de chargement (3) tourne seulement autour de son point de support (7) est constitué principalement par une première liaison (12), entre le châssis (13) du véhicule de transport (2) et l'arbre rotatif inférieur (9), qui permet de maintenir ledit arbre rotatif (9) dans une seule et même position lorsque le rabat de chargement (3) est abaissé, par une seconde liaison (14) entre le châssis (13) du véhicule de transport (2) et l'arbre rotatif supérieur (10), ladite seconde liaison (14) étant réglable en hauteur et comportant, à cet effet, au moins deux bras (18,19) qui sont reliés l'un à l'autre au moyen d'articulations, ladite liaison (14) permettant de déplacer l'arbre rotatif supérieur (10), et par un moyen d'entraînement pour imprimer ledit mouvement lorsque la plate-forme de chargement (5) est placée dans une position oblique, respectivement horizontale, constitué par au moins un cylindre de pression (21) pour déplacer mutuellement les bras (18,19), en d'autres termes pour modifier l'angle (A) formé entre eux, caractérisé en ce que le bras (19) qui est fixé au rabat de chargement (3) est conçu sous forme d'un bras de levier et en ce que le cylindre de pression (21) est monté entre ledit bras (19) et le châssis (13) du véhicule de transport (2).

2. Hayon élévateur selon la revendication 1, caractérisé en ce qu'il est muni d'éléments d'arrêt (24) entre lesdits deux bras (18,19) qui déterminent la plus petite longueur possible de la seconde liaison (14).

3. Hayon élévateur selon la revendication 2, caractérisé en ce que les éléments d'arrêt (24) sont constitués principalement par une rainure (26) pratiquée dans le bras (18) qui est relié au châssis (13) au moyen d'articulations, et par une cheville (25) travaillant conjointement avec la rainure (26) qui est pratiquée dans le bras (19) qui est relié au rabat de chargement (3) au moyen d'articulations.

4. Hayon élévateur selon la revendication 3, caractérisé en ce que la cheville susmentionnée (25) est située à hauteur du bras de l'arbre rotatif (10), là où le rabat de chargement (3) et la seconde liaison (14) sont reliés l'un à l'autre.

5. Hayon élévateur selon la revendication 1, caractérisé en ce qu'il est muni d'éléments d'arrêt (24) entre lesdits deux bras (18,19) qui déterminent la plus petite longueur possible de la seconde liaison (14); en ce que les éléments d'arrêt (24) sont constitués principalement par une rainure (26) pratiquée dans le bras (18) qui est relié au châssis (13) au moyen d'articulations, et par une cheville (25) travaillant conjointement avec la rainure (26) qui est pratiquée dans le bras (19) qui est relié au rabat de chargement (3) au moyen d'articulations; et en ce que la cheville susmentionnée (25) est située à hauteur du point de rotation (22) là où le cylindre pneumatique (21) est couplé au bras susmentionné (19) qui est relié au rabat de chargement (3).

6. Hayon élévateur selon l'une quelconque des revendications précédentes, caractérisé en ce que la première liaison (12) est constituée principalement par un cylindre de pression (15) permettant de modifier la longueur de la première liaison (12).

7. Hayon élévateur selon l'une quelconque des revendications précédentes, caractérisé en ce que les points de fixation de la première liaison (12) et de la seconde liaison (14) au châssis (13) et au rabat de chargement (3) pour la position du rabat de chargement (3) par laquelle la plate-forme de chargement (5) est horizontale, sont situés aux points culminants d'un parallélogramme.
